(19) Europäisches Patentamt
European Patent Office
Office européen des brevets

(11) **EP 2 386 020 B1**

(12) **EUROPÄISCHE PATENTSCHRIFT**

(45) Veröffentlichungstag und Bekanntmachung des Hinweises auf die Patenterteilung:
**10.10.2012 Patentblatt 2012/41**

(51) Int Cl.:
*F02D 41/04* *(2006.01)*   *F02D 41/34* *(2006.01)*
*F02N 11/08* *(2006.01)*

(21) Anmeldenummer: **09752167.8**

(22) Anmeldetag: **10.11.2009**

(86) Internationale Anmeldenummer:
**PCT/EP2009/064869**

(87) Internationale Veröffentlichungsnummer:
**WO 2010/078983 (15.07.2010 Gazette 2010/28)**

(54) **VERFAHREN ZUR ERKENNUNG EINES MOTOR-STILLSTANDES WÄHREND DES AUSLAUFENS EINES MOTORS, INSBESONDERE FÜR EIN KRAFTFAHRZEUG**

METHOD FOR DETECTING AN ENGINE STANDSTILL WHILE AN ENGINE IS COASTING, IN PARTICULAR FOR A MOTOR VEHICLE

PROCÉDÉ D'IDENTIFICATION D'UN ARRÊT MOTEUR PENDANT LE RALENTISSEMENT D'UN MOTEUR, EN PARTICULIER POUR UN VÉHICULE AUTOMOBILE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **08.01.2009   DE 102009000082**

(43) Veröffentlichungstag der Anmeldung:
**16.11.2011   Patentblatt 2011/46**

(73) Patentinhaber: **Robert Bosch GmbH**
**70442 Stuttgart (DE)**

(72) Erfinder:
• **LINSENMAIER, Claus**
**73230 Kirchheim Unter Teck (DE)**
• **PIETSCH, Elmar**
**70806 Kornwestheim (DE)**
• **DERINGER, Carsten**
**73773 Aichwald (DE)**
• **EGE, Taskin**
**71706 Markgroeningen (DE)**

(56) Entgegenhaltungen:
EP-A2- 1 882 838     WO-A1-2005/052345
DE-A1- 10 308 000     DE-A1- 10 350 777
FR-A1- 2 860 069     US-A1- 2008 236 265

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 386 020 B1

**Beschreibung**

Stand der Technik

Die Erfindung betrifft ein Verfahren zur Erkennung eines Motorstillstandes während des Auslaufens eines Motors, insbesondere bei einem Kraftfahrzeug, bei welchem die Impulsflanken eines auf einer Welle des Motors ange-ordneten Imputsgebers erfasst werden, wobei das Auftreten von Impulsflanken des Impulsgebers bis zu einem vorgegebenen Zeitpunkt überwacht werden sowie eine Vorrichtung zur Durchführung des Verfahrens.

Für bestimmte Anwendungen in einem Kraftfahrzeug ist es wichtig festzustellen, dass der Verbrennungsmotor als stehend betrachtet werden kann. Es ist bekannt, einen Verbrennungsmotor als stehend zu betrachten, wenn in einer definierten Wartezeit keine Impulsflanken eines an der Kurbel4velle des Verbrennungsmotors angeordneten Impulsgebers durch einen Drehzahlgeber detektiert wird. Die Wartezeit wird dabei auf der Grundlage von Erfahrungen definiert und erfolgt eher zu lange, um für die unterschiedlichsten Verbrennungsmotoren einen gemeinsamen Wert verwenden zu können. Mit der Festlegung einer solchen Wartezeit wird sicher verhindert, dass der Verbrennungsmotor zu früh als stehend betrachtet wird.

Aus der EP 0 612 373 B1 ist eine Einrichtung zur Erkennung der Stellung wenigstens einer, eine Referenzmarke aufweisenden Welle bekannt, bei welcher eine Auslauferkennung stattfindet, die nach dem Abschalten des Zündschlosses beginnt und erst dann beendet wird, wenn die Kurbelwelle bzw. die Nockenwelle eines Verbrennungsmotors zum Stillstand gekommen sind. Die Referenzmarke ist dabei auf einer an der Welle befestigten Geberscheibe angeordnet und wird erkannt, indem Zeitabstände zwischen einzelnen Impulsen ausgewertet werden, die durch Markierungen der Geberscheibe verursacht werden. Durch diese Auswertung ist die exakte Lage der Geberscheibe und somit der Welle immer bekannt. Dadurch ist es auch möglich, die exakte Lage der Welle beim Stillsland der Welle festzustellen.

FR2860069 beschreibt ein Verfahren zur Erkennung eines Motorstillstandes, wobei eine aktuell vergangene Zeit durch die Zeit zwischen zwei vorhergehenden Zähnen dividiert wird, und bei Überschreitung eines Schwellwertes durch diesen Quotienten ein Motorstillstand erkannt wird.

Bei Kraftfahrzeugen, in welchen der Verbrennungsmotor in einem so genannten Start-Stopp- Betrieb arbeitet, schaltet sich der Verbrennungsmotor aus, wenn dass Fahrzeug anhält, was beispielsweise an einer Ampel geschieht, ohne dass der Zündschlüssel betätigt wird. Bei einigen Fahrzeugherstellern wird der Verbrennungsmotor allein durch die Betätigung des Gaspedals zur Weiterfahrt wieder gestartet. In solchen Situationen soll es dem Fahrzeugführer ermöglicht werden, möglichst schnell nach einem Motorstopp wieder starten zu können.

Der Start kann aber nur erfolgen, wenn der Verbrennungsmotor sicher steht, da nur in diesem Fall ein Starter in die Welle des Verbrennungsmotors eingerückt werden kann.

Offenbarung der Erfindung

Das erfindungsgemäße Verfahren zur Erkennung eines Motor-Stillstandes bei einem auslaufenden Motor mit den Merkmalen des Anspruchs 1 weist den Vorteil auf, dass ein Motorstillstand möglichst schnell erkannt wird. Es wird eine variable Wartezeit bestimmt, wenn mindestens drei aufeinander folgende Impulsflanken des Impulsgebers erfasst werden, der zeitliche Abstand zwischen jeweils zwei aufeinander folgender Impulsflanken gemessen wird und aus den zeitlichen Abständen der Impulsflanken ein Zeitpunkt des Auftretens der nächsten Impulsflanke bestimmt wird, wobei beim Ausbleiben der nächsten Impulsflanke bis zu diesem Zeitpunkt der Motor als stehend betrachtet wird. Somit wird ausgehend von den aktuellen Verhältnissen des Motors sehr schnell erkannt, ob dieser steht und ob ein Neustart möglich ist, da nicht nur eine Aussage darüber getroffen werden kann, wie schnell sich der Motor noch dreht, sondern zu welchem Zeitpunkt die nächste Flanke des Impulsgebers erwartet werden kann. Trifft die Flanke bis zu diesem Zeitpunkt nicht ein, wird der Motor als stehend betrachtet.

Der Motorstillstand wird somit für jeden Motortyp und für jeden Motorauslauf spezifisch und sehr schnell bestimmt.

In einer Ausgestaltung wird der vorgegebene Zeitpunkt aus einer Extrapolation der zeitlichen Abstände der Impulsflanken bestimmt, welche vor der Bestimmung des Zeitpunktes ausgewertet wurden. Dadurch wird berücksichtigt, dass die Geschwindigkeitsabnahme des Motors nicht linear erfolgt. Bei einem Verbrennungsmotor eines Kraftfahrzeuges kommt es durch periodische Kräfte, z.B. durch Kompressionen in den Zylindern, zu einer periodischen Geschwindigkeitsabnahme.

In einer Weiterbildung wird der vorgegebene Zeitpunkt einmal für positive Beschleunigungen und einmal für negative Beschleunigungen berechnet, wobei die Differenz zwischen den so erhaltenen Zeiten ausgewertet wird, um festzustellen, ob der Motor steht. Der Motor ändert während des Auslaufens seine Drehrichtung (rückpendeln), was bei Verbrennungsmotoren in niedrigen Drehzahlbereichen auftreten kann. Somit werden alle möglichen Situationen, welche beim Auslaufen eines Motors auftreten können, berücksichtigt.

In einer Ausgestaltung wird ein erster Zeitpunkt für eine positive Beschleunigung des Motors oder ein zweiter Zeitpunkt für eine negative Beschleunigung des Motors berechnet, wobei der größere, der für den ersten und den zweiten Zeitpunkt ermittelten Werte als Maximalwert für den vorgegebenen Zeitpunkt angenommen wird. Da immer der größere Zeitwert für die Erfassung der nächsten Flanke des Impulsgebers angesetzt wird, wird die Sicherheit der Messung erhöht, da wenn bis zu diesem Zeitwert keine Impulsflanke detektiert wird, der Motor tatsächlich zum Stillstand gekommen ist.

In einer Weiterbildung werden bei der Bestimmung der Impulsflanke eine Bezugsmarke des Impulsgebers und/ oder die Drehrichtung der Welle berücksichtigt. Dadurch kann das erfindungsgemäße Verfahren auch in einem unsynchronisierten Betriebsbereich angewendet werden. Ein unsynchronisierter Betriebsbereich ist vorhanden, wenn der Motor beispielsweise zurückpendelt. Hier werden die Impulsflanken selbständig vor- und rückwärts gezählt, ohne dass eine Synchronisation auf eine Lücke des Impulsgebers, die mit 0° gekennzeichnet ist, notwendig ist. In einer anderen Weiterbildung der Erfindung werden bei einer Vorrichtung zur Erkennung eines Motorstillstandes während des Auslaufens eines Motors, insbesondere bei einem Kraftfahrzeug, die Impulsflanken eines auf einer Welle des Motors angeordneten Impulsgebers erfasst, wobei das Auftreten von Impulsflanken des Impulsgebers bis zu einem vorgegebenen Zeitpunkt überwacht werden. Um den Motorstillstand möglichst schnell zu erkennen, sind Mittel vorhanden, weiche mindestens drei aufeinander folgende Impulsflanken des Impulsgebers erfassen, den zeitliche Abstand zwischen jeeveils zwei aufeinander folgender Impulsflanken messen und aus den zeitlichen Abständen der Impulsflanken einen Zeitpunkt des Auftretens der nächsten Impulsflanke bestimmen, wobei beim Ausbleiben der nächsten Impulsflanke bis zu diesem Zeitpunkt der Motor als stehend betrachtet wird. Dies hat den Vorteil, dass mit Hilfe dieser Messung die tatsächlich auftretenden Verhältnisse des Motorauslaufens bestimmt werden und sicher festgestellt werden kann, ob der Motor als stehend betrachtet werden kann oder nicht. Dabei werden die spezifischen Eigenschaften des zu betrachtenden Motors jederzeit mit berücksichtigt.

In einer Ausgestaltung umfassen die Mittel einen Drehzahlgeber, welcher die Impulsflanken in beiden Drehrichtungen des Motors selbsttätig definiert. Durch den Einsatz eines solchen Drehzahlgebers kann auf eine Synchronisation mit dem Impulsgeber verzichtet werden, da der Drehzahlgeber vorwärts und rückwärts zählt. Mit einem solchen Drehzahlgeber werden zuverlässig positive wie auch negative Beschleunigungen beim Auslaufen des Motors erfasst. Die Auszählung der Impulsflanken erfolgt in einem Steuergerät.

In einer Weiterbildung ist der Drehzahlgeber mit einem Steuergerät eines Verbrennungsmotors verbunden, welches den vorgegebenen Zeitpunkt bestimmt. Auf diese Weise werden an sich im Kraftfahrzeug schon vorhandenen Bauteile benutzt, wodurch die Erfindung kostengünstig umgesetzt werden kann.

Vorteilhafterweise arbeitet der Verbrennungsmotor in einem Start-Stopp-Betrieb. Das bedeutet, dass der Verbrennungsmotor beim Anhalten des Kraftfahrzeugs beispielsweise durch Betätigung des Bremspedals ausgeht und bei der Betätigung des Gaspedals zur beabsichtigten Weiterfahrt wieder angeht. Dies passiert ohne Zuhilfenahme des Zündschlüssels. Insbesondere bei kurzen Stopps, wie beispielsweise an einer Ampel, kann der Stillstand des Motors besonders einfach und schnell detektiert werden.

Die Erfindung lässt zahlreiche Ausführungsformen zu. Eine davon soll anhand der in der Zeichnung dargestellten Figuren näher erläutert werden.

Es zeigt:

Figur 1: Prinzipaufbau einer erfindungsgemäßen Vorrichtung

Figur 2: Verhalten eines Verbrennungsmotors eines Kraftfahrzeugs beim Auslaufen des Verbrennungsmotors

Figur 3: Ausführungsbeispiel für das erfindungsgemäße Verfahren

Figur 4: Verlauf der Impulsflanken eines Impulsgebers beim Auslaufen des Motors

Gleiche Merkmale sind mit gleichen Bezugszeichen gekennzeichnet.

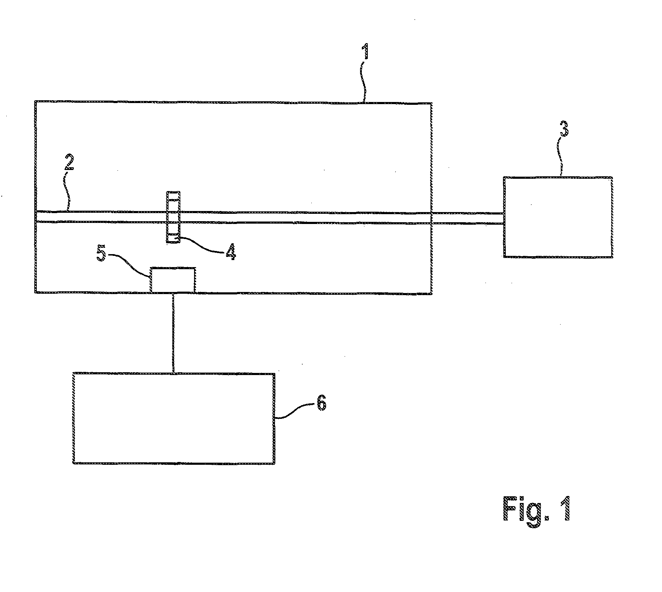

In Figur 1 ist ein Verbrennungsmotor 1 eines Kraftfahrzeuges dargestellt, welcher eine Kurbelwelle 2 aufweist, die die nicht weiter dargestellten Zylinder des Verbrennungsmotors 1 antreibt. Die Kurbelwelle 2 ist zum Start des Verbrennungsmotors 1 mit einem Anlasser 3 verbunden, welcher außerhalb des Verbrennungsmotors 1 in die Kurbelwelle eingreift. Darüber hinaus ist auf der Kurbelwelle 2 ein Zahnrad 4 als Impulsgeber angeordnet. Das Zahnrad 4 umfasst beispielsweise 58 Zähne und eine Lücke,

Dem Zahnrad 4 ist gegenüberliegend ein Drehzahlgeber 5 positioniert, welcher mit einem Motorsteuergerät 6 verbunden ist. Die Software des Motorsteuergerätes 6 erkennt die Lücke auf dem Zahnrad 4 und synchronisiert auf diese Lücke die Winkelposition von 0° des Verbrennungsmotors 1. Jeder Zahn des Zahnrades 4 ist beispielsweise um 6° zum vorhergehenden bzw. nachfolgenden Zahn verschoben.

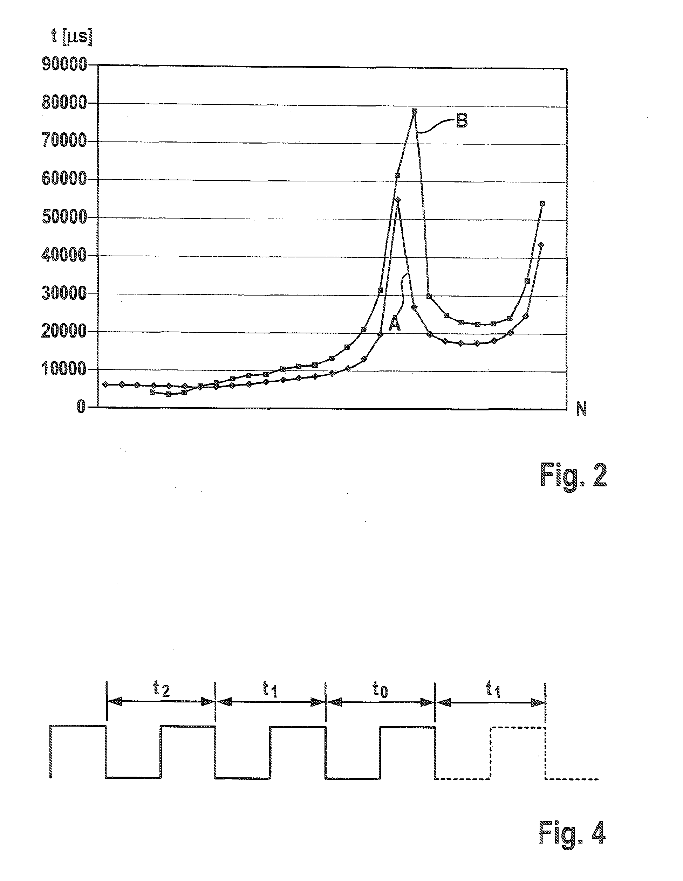

In der Kurve A der Figur 2 ist das Auslaufen eines Verbrennungsmotors 1 aufgezeigt. Dabei ist der zeitliche Abstand t über den durch die Zähne des Zahnrades 4 verursachten Impulsflanken N dargestellt, welche durch den Drehzahlgeber 5 detektiert werden. Während die zeitlichen Abstände zwischen den Impulsflanken N zu Beginn der Messung erwartungsgemäß geringer werden und sich beispielsweise von 6000 $\mu$s auf etwa 5000 $\mu$s verringern, pendelt der Verbrennungsmotor 1 anschließend zurück, was bedeutet, das er seine Drehrichtung ändert. Dabei steigen die zeitlichen Abstände t der aufeinander folgenden Impulsflanken N immer mehr an. Wie in Figur 2, Kurve A dargestellt, tritt in diesem Zustand eine Impulsflanke N eines Zahnes des Zahnrades 4 bei beispielsweise 20000 $\mu$s auf, während die darauf folgende Impulsflanke N1 bei 55000 $\mu$s auftritt. Ein solches Verhalten des Verbrennungsmotors 1 tritt insbesondere in niedrigen Drehzahlbereichen auf und muss bei der Erkennung des Stillstandes des Verbrennungsmotors 1 mit berücksichtigt werden.

Aus diesem Grund wird als Drehzahlgeber 5 ein Geber eingesetzt, welcher die Impulsflanken vor- und rückwärts zählen und somit die Impulsflanken in beide Drehrichtungen der Kurbelwelle 2 sicher auswerten kann.

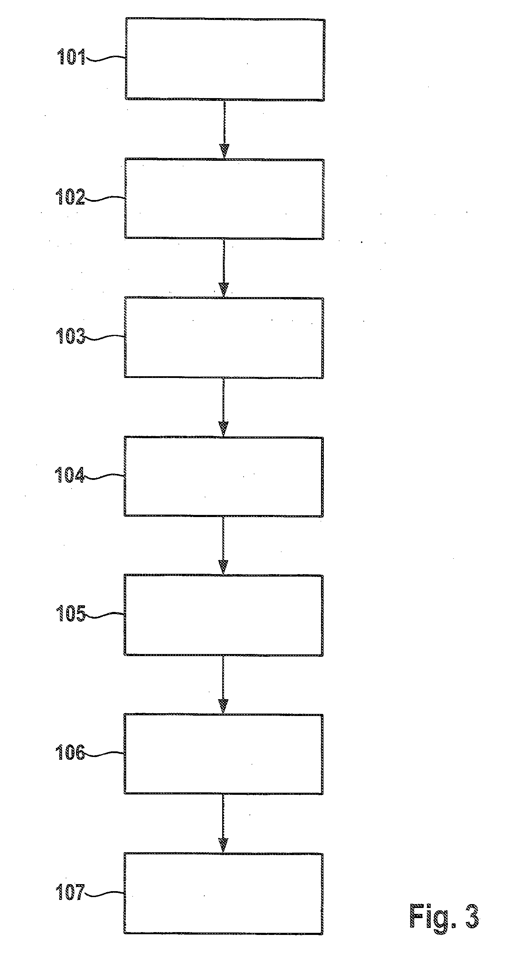

Mit Hilfe von Figur 3 soll nun eine mögliche Ausführungsform des erfindungsgemäßen Verfahrens beschrieben werden, wobei davon ausgegangen wird, dass der Verbrennungsmotor 1 in einem Start-Stopp-Betrieb arbeitet. Im Block 101 hält das Fahrzeug an und der Verbrennungsmotor 1 wird abgeschaltet. Im Block 102 werden vier aufeinander folgende, gleichgerichtete Impulsflanken N durch den Drehzahlgeber 5 detektiert. Wie in Figur 4 dargestellt, werden die abfallenden Impulsflanken des Gebersignals ausgewertet.

Das Motorsteuergerät 6 ermittelt im Block 103 die Zeiten t zwischen dem Auftreten jeweils zweier unmittelbar aufeinander folgender Impulsflanken und erhält somit drei Zeiten $t_{-2}$, $t_{-1}$ und $t_0$. Im Block 104 werden die so ermittelten zeitlichen Abstände zwischen den aufeinander folgenden Zähnen des Zahnrades 4 dazu verwendet, um über eine Interpolation die Zeit t1 der eintreffenden Impulsflanke $N_1$ des nächsten Zahnes des Zahnrades 4 zu bestimmen. Dazu werden zwei verschiedene Gleichungen verwendet, eine für positive Beschleunigungen der Kurbelwelle 2 und eine für negative Beschleunigungen der Kurbelwelle 2. Unter einer negativen Beschleunigung soll verstanden werden, dass sich die Zeiten zwischen zwei Impulsflanken N von kleineren Zeiten zu größeren Zeiten ändern.

Für positive Beschleunigungen gilt:

$$(t_{11}) = (t_0) + A(t_0 - t_1) + B(t_1 - t_{-2}) \qquad (1)$$

Für negative Beschleunigungen gilt:

$$(t_{12}) = C(t_0) + D(t_0 - t_1) \qquad (2)$$

Wobei

$t_0$ : gemessener zeitlicher Abstand zwischen den letzten beiden Impulsflanken;

$t_{-1}$ : gemessener zeitlicher Abstand zwischen der vorletzten und der vor vorletzten Impulsflanken;

$t_{-2}$ : gemessener zeitlicher Abstand zwischen der vor vorletzten Impulsflanke und der dieser vorausgehenden Impulsflanke

A, B, C, D: Applikationsparameter

Im Block 105 werden die beiden aus den Gleichungen 1 und 2 erhaltenen Werte $t_{11}$ und $t_{12}$ miteinander verglichen und der größere der beiden Werte bestimmt. Anschließend wird im Block 106 der so ermittelte größere Wert als der Zeitpunkt ausgegeben, in welchen die nächste Impulsflanke, also der nächste Zahn des Zahnrades 4, erwartet wird. Trifft die nächstfolgende Impulsflanke bis zu diesem Zeitpunkt nicht ein, wird der Verbrennungsmotor 1 als stehend betrachtet und der Anlasser 3 kann nach einer Betätigung des Gaspedals durch den Fahrzeugführer wieder eingerückt werden, wodurch der Verbrennungsmotor 1 wieder gestartet wird (Block 107).

Die durch das erläuterte Verfahren erhaltenen extrapolierten Zeitpunkte für die jeweils nächste Zahnflanke ist in der Figur 2 in der Kurve B dargestellt. Aus der Gegenüberstellung zu den beim Motorauslauf direkt gemessenen Zeitpunkten (Kurve A) geht hervor, dass die so ermittelten Zeitpunkte immer über den gemessenen Zeitpunkten liegen, wodurch ausreichend Sicherheit gegeben ist, den Stillstand des Verbrennungsmotors 1 zuverlässig zu erkennen.

**Patentansprüche**

1. Verfahren zur Erkennung eines Motorstillstandes während des Auslaufens eines Motors, insbesondere bei einem Kraftfahrzeug, bei welchem die Impulsflanken (N) eines auf einer Welle (2) des Motors (1) angeordneten Impulsgebers (4) erfasst werden, wobei das Auftreten von Impulsflanken (N) des Impulsgebers (4) bis zu einem vorgegebenen Zeitpunkt überwacht werden, wobei mindestens drei aufeinander folgende Impulsflanken (N) des Impulsgebers (4) erfasst werden, der zeitliche Abstand ($t_0$, $t_{-1}$, $t_{-2}$) zwischen jeweils zwei aufeinander folgender Impulsflanken (N) gemessen wird und aus den zeitlichen Abständen ($t_0$, $t_{-1}$, $t_{-2}$) der Impulsflanken N ein Zeitpunkt ($t_{11}$, $t_{12}$) des Auftretens der nächsten Impulsflanke ($N_1$) bestimmt wird, wobei beim Ausbleiben der nächsten Impulsflanke ($N_1$) bis zu diesem Zeitpunkt ($t_{11}$, $t_{12}$) der Motor als stehend betrachtet wird, **dadurch gekennzeichnet, dass** der vorgegebene Zeitpunkt ($t_{11}$, $t_{12}$) aus einer Extrapolation der zeitlichen Abstände ($t_0$, $t_{-1}$, $t_{-2}$) der Impulsflanken (N) bestimmt wird, dass der vorgegebene Zeitpunkt ($t_{11}$, $t_{12}$) einmal für eine positive Beschleunigung des Motors (1) und einmal für eine negative Beschleunigung des Motors (1) berechnet wird, wobei die Differenz zwischen den so erhaltenen Zeiten ausgewertet wird, und dass ein erster Zeitpunkt ($t_{11}$) für eine positive Beschleunigung des Motors (1) oder ein zweiter Zeitpunkt ($t_{12}$) für eine negative Beschleunigung des Motors (1) berechnet wird, wobei der größere, der für den ersten und den zweiten Zeitpunkt ($t_{11}$, $t_{12}$) ermittelten Werte als Maximalwert für den vorgegebenen Zeitpunkt angenommen wird.

2. Verfahren nach Anspruch 1 **dadurch gekennzeichnet, dass** bei der Bestimmung der Impulsflanken (N) eine Bezugsmarke des Impulsgebers (4) und/oder die Drehrichtung der Welle (2) berücksichtigt werden.

3. Vorrichtung zur Erkennung eines Motorstillstandes während des Auslaufens des Motors, insbesondere bei einem Kraftfahrzeug, bei welchem die Impulsflanken (N) eines auf einer Welle (2) des Motors (1) angeordneten Impulsgebers (4) erfasst werden, wobei das Auftreten von Impulsflanken (N) des Impulsgebers (4) bis zu einem vorgegebenen Zeitpunkt ($t_{11}$, $t_{12}$) überwacht werden, wobei Mittel (5, 6) vorhanden sind, welche mindestens drei aufeinander folgende Impulsflanken (N) des Impulsgebers (4) erfassen, den zeitliche Abstand ($t_0$, $t_{-1}$, $t_{-2}$) zwischen jeweils zwei aufeinander folgender Impulsflanken (N) messen und aus den zeitlichen Abständen ($t_0$, $t_1$, $t_2$) der Impulsflanken einen Zeitpunkt ($t_{11}$, $t_{12}$) des Auftretens der nächsten Impulsflanke (N1) bestimmen, wobei beim Ausbleiben der nächsten Impulsflanke (N1) bis zu diesem Zeitpunkt ($t_{11}$, $t_{12}$) der Motor (1) als stehend betrachtet wird, **dadurch gekennzeichnet, dass** der vorgegebene Zeitpunkt ($t_{11}$, $t_{12}$) aus einer Extrapolation der zeitlichen Abstände ($t_0$, $t_1$, $t_{-2}$) der Impulsflanken (N) bestimmt wird, dass der vorgegebene Zeitpunkt ($t_{11}$, $t_{12}$) einmal für eine positive Beschleunigung des Motors (1) und einmal für eine negative Beschleunigung des Motors (1) berechnet wird, wobei die Differenz zwischen den so erhaltenen Zeiten ausgewertet wird, und dass ein erster Zeitpunkt ($t_{11}$) für eine positive Beschleunigung des Motors (1) oder ein zweiter Zeitpunkt ($t_{12}$) für eine negative Beschleunigung des Motors (1) berechnet wird, wobei der größere, der für den ersten und den zweiten Zeitpunkt ($t_{11}$, $t_{12}$) ermittelten Werte als Maximalwert für den vorgegebenen Zeitpunkt angenommen wird.

4. Vorrichtung nach Anspruch 3 **dadurch gekennzeichnet, dass** die Mittel einen Drehzahlgeber (5) umfassen, welcher die Impulsflanken (N) in beiden Drehrichtungen des Motors (1) selbsttätig definiert und auszählt.

5. Vorrichtung nach Anspruch 3 und 4 **dadurch gekennzeichnet, dass** der Drehzahlgeber (5) mit einem Steuergerät (6) eines Verbrennungsmotors (1) verbunden ist, welches den vorgegebenen Zeitpunkt ($t_{11}$, $t_{12}$) bestimmt.

6. Vorrichtung nach Anspruch 5 **dadurch gekennzeichnet, dass** der Verbrennungsmotor (1) in einem Start-Stopp-Betrieb arbeitet.


**Claims**

1. Method for identifying when an engine is stationary during coasting of an engine, in particular in a motor vehicle, in which method the pulse edges (N) of a pulse transmitter (4) which is arranged on a shaft (2) of the engine (1) are detected, wherein the occurrence of pulse edges (N) of the pulse transmitter (4) is monitored up to a prespecified time point, wherein at least three successive pulse flanks (N) of the pulse transmitter (4) are detected, the time interval ($t_0$, $t_1$, $t_2$) between in each case two successive pulse edges (N) is measured and a time point ($t_{11}$, $t_{12}$) of the occurrence of the next pulse edge ($N_1$) is determined from the time intervals ($t_0$, $t_1$, $t_2$) of the pulse edges (N), wherein the engine is considered to be stationary when there is no next pulse edge ($N_1$) up to this time point ($t_{11}$, $t_{12}$), **characterized in that** the prespecified time point ($t_{11}$, $t_{12}$) is determined by extrapolating the time intervals ($t_0$, $t_1$, $t_2$) of the pulse edges (N), **in that** the prespecified time point ($t_{11}$, $t_{12}$) is calculated once for a positive acceleration of the engine (1) and once for a negative acceleration of the engine (1), wherein the difference between the times obtained in this way is evaluated, and **in that** a first time point ($t_{11}$) is calculated for a positive acceleration of the engine (1) or a second time point ($t_{12}$) is calculated for a negative acceleration of the engine (1), wherein the larger of the values which are ascertained for the first and the second time points ($t_{11}$, $t_{12}$) is taken as the maximum value for the prespecified time point.

2. Method according to Claim 1, **characterized in that**, when the pulse edges (N) are determined, a reference mark of the pulse transmitter (4) and/or the direction of rotation of the shaft (2) are/is taken into consideration.

3. Apparatus for identifying when an engine is stationary during coasting of the engine, in particular in a motor vehicle, in which apparatus the pulse edges (N) of a pulse transmitter (4) which is arranged on a shaft (2) of the engine (1) are detected, wherein the occurrence of pulse edges (N) of the pulse transmitter (4) is monitored up to a prespecified time point ($t_{11}$, $t_{12}$), wherein means (5, 6) are present which detect at least three successive pulse edges (N) of the pulse transmitter (4), measure the time interval ($t_0$, $t_1$, $t_2$) between in each case two successive pulse edges (N) and determine a time point ($t_{11}$, $t_{12}$) of the occurrence of the next pulse edge ($N_1$) from the time intervals ($t_0$, $t_1$, $t_2$) of the pulse edges, wherein the engine (1) is considered to be stationary when there is no next pulse edge ($N_1$) up to this time point ($t_{11}$, $t_{12}$), **characterized in that** the prespecified time point ($t_{11}$, $t_{12}$) is determined by extrapolating the time intervals ($t_0$, $t_1$, $t_2$) of the pulse edges (N), **in that** the prespecified time point ($t_{11}$, $t_{12}$) is calculated once for a positive acceleration of the engine (1) and once for a negative acceleration of the engine (1), wherein the difference between the times obtained in this way is evaluated, and **in that** a first time point ($t_{11}$) is calculated for a positive acceleration of the engine (1) or a second time point ($t_{12}$) is calculated for a negative acceleration of the engine (1), wherein the larger of the values which are ascertained for the first and the second time points ($t_{11}$, $t_{12}$) is taken as the maximum value for the prespecified time point.

4. Apparatus according to Claim 3, **characterized in that** the means comprise a rotation speed sensor (5) which automatically defines and counts the pulse edges (N) in both directions of rotation of the engine (1).

5. Apparatus according to Claims 3 and 4, **characterized in that** the rotation speed sensor (5) is connected to a controller (6) of an internal combustion engine (1), which controller determines the prespecified time point ($t_{11}$, $t_{12}$).

6. Apparatus according to Claim 5, **characterized in that** the internal combustion engine (1) operates in a start/stop mode.

**Revendications**

1. Procédé d'identification d'un arrêt moteur pendant le ralentissement d'un moteur, notamment dans un véhicule automobile, dans lequel les fronts d'impulsion (N) d'un émetteur d'impulsion (4) disposé sur un arbre (2) du moteur (1) sont détectés, la survenue de fronts d'impulsion (N) de l'émetteur d'impulsion (4) étant surveillée jusqu'à un instant prédéfini, au moins trois fronts d'impulsion (N) successifs de l'émetteur d'impulsion (4) étant détectés, l'écart temporel ($t_0$, $t_1$, $t_2$) entre respectivement deux fronts d'impulsion (N) successifs étant mesuré et un instant ($t_{11}$, $t_{12}$) de la survenue du front d'impulsion suivant ($N_1$) étant déterminé à partir des écarts temporels ($t_0$, $t_1$, $t_2$) des fronts d'impulsion (N), le moteur étant considéré comme à l'arrêt en cas d'absence du front d'impulsion suivant ($N_1$) jusqu'à cet instant ($t_{11}$, $t_{12}$), **caractérisé en ce que** l'instant ($t_{11}$, $t_{12}$) prédéfini est déterminé à partir d'une extrapolation des écarts temporels ($t_0$, $t_1$, $t_2$) des fronts d'impulsion (N), que l'instant prédéfini ($t_{11}$, $t_{12}$) est calculé une fois pour une accélération positive du moteur (1) et une fois pour une accélération négative du moteur (1), la différence entre les moments ainsi obtenus étant analysée et un premier instant ($t_{11}$) étant calculé pour une accélération positive du moteur (1) ou un deuxième instant ($t_{12}$) étant calculé pour une accélération négative du moteur (1), la plus grande des valeurs calculées pour le premier et le deuxième instant ($t_{11}$, $t_{12}$) servant de valeur maximale pour l'instant prédéfini.

2. Procédé selon la revendication 1, **caractérisé en ce que** lors de la détermination des fronts d'impulsion (N), un repère placé sur l'émetteur d'impulsion (4) et/ou le sens de rotation de l'arbre (2) sont pris en compte.

3. Dispositif d'identification d'un arrêt moteur pendant le ralentissement du moteur, notamment dans un véhicule automobile, dans lequel les fronts d'impulsion (N) d'un émetteur d'impulsion (4) disposé sur un arbre (2) du moteur (1) sont détectés, la survenue de fronts d'impulsion (N) de l'émetteur d'impulsion (4) étant surveillée jusqu'à un instant ($t_{11}$, $t_{12}$) prédéfini, des moyens (5, 6) étant prévus permettant de détecter au moins trois fronts d'impulsion (N) successifs de l'émetteur d'impulsion (4), de mesurer l'écart temporel ($t_0$, $t_1$, $t_2$) entre respectivement deux fronts d'impulsion (N) successifs et de déterminer un instant ($t_{11}$, $t_{12}$) de la survenue du front d'impulsion suivant ($N_1$) à partir des écarts temporels ($t_0$, $t_1$, $t_2$) des fronts d'impulsion, le moteur (1) étant considéré comme à l'arrêt en cas d'absence du front d'impulsion suivant ($N_1$) jusqu'à cet instant ($t_{11}$, $t_{12}$), **caractérisé en ce que** l'instant ($t_{11}$, $t_{12}$) prédéfini est déterminé à partir d'une extrapolation des écarts temporels ($t_0$, $t_1$, $t_2$) des fronts d'impulsion (N), que l'instant prédéfini ($t_{11}$, $t_{12}$) est calculé une fois pour une accélération positive du moteur (1) et une fois pour une accélération négative du moteur (1), la différence entre les moments ainsi obtenus étant analysée et un premier instant ($t_{11}$) étant calculé pour une accélération positive du moteur (1) ou un deuxième instant ($t_{12}$) étant calculé pour une accélération négative du moteur (1), la plus grande des valeurs calculées pour le premier et le deuxième instant ($t_{11}$, $t_{12}$) servant de valeur maximale pour l'instant prédéfini.

4. Dispositif selon la revendication 3, **caractérisé en ce que** les moyens comprennent un capteur de vitesse de rotation (5) définissant automatiquement les fronts d'impulsion (N) dans les deux sens de rotation du moteur (1) et les comptant.

5. Dispositif selon la revendication 3 et 4, **caractérisé en ce que** le capteur de vitesse de rotation (5) est relié à un appareil de commande (6) d'un moteur à combustion interne (1) déterminant l'instant ($t_{11}$, $t_{12}$) prédéfini.

6. Dispositif selon la revendication 5, **caractérisé en ce que** le moteur à combustion interne (1) fonctionne en mode asynchrone.

Fig. 1

Fig. 2

Fig. 4

Fig. 3

**EP 2 386 020 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0612373 B1
- FR 2860069